# EUROPÄISCHE PATENTSCHRIFT

(11) **EP 2 531 374 B1**
(45) Veröffentlichungstag und Bekanntmachung des Hinweises auf die Patenterteilung: **26.06.2019**
(21) Anmeldenummer: 11703129.4
(22) Anmeldetag: 28.01.2011
(51) Int. Cl.: B60N 2/66, B60N 2/68

(54) **RÜCKENLEHNE AUS KUNSTSTOFF MIT AUS KUNSTSTOFF GEBILDETEN ODER BESCHICHTETEN FUNKTIONSELEMENTEN**
PLASTIC SEAT-BACK MADE OF OR COATED WITH PLASTIC
DOSSIER EN MATIÈRE PLASTIQUE DOTÉ D'ÉLÉMENT DE FUNCTIONEMMENT RÉALISÉ EN UNE MATIÈRE PLASTIQUE OU REVÊTU DE MATIÈRE PLASTIQUE

(30) Priorität: 06.02.2010 DE 102010007052
(43) Veröffentlichungstag der Anmeldung: 12.12.2012
(73) Patentinhaber: Sitech Sitztechnik GmbH, 38442 Wolfsburg (DE)
(72) Erfinder: BAUMGARTEN, Jens, 38102 Braunschweig (DE)
(86) Internationale Anmeldenummer: PCT/EP2011/000377
(87) Internationale Veröffentlichungsnummer: WO 2011/095302

(56) Entgegenhaltungen:
- WO-A1-00/47441
- WO-A1-03/092440
- DE-A1- 10 243 617
- DE-C1- 19 961 070
- US-A- 5 253 924

## Beschreibung

Die Erfindung betrifft einen Fahrzeugsitz mit einer eigenfesten aus Kunststoff bestehenden Rückenlehne.

Sitzkonstruktionen in Fahrzeugen müssen bestimmte Sicherheitsnormen erfüllen. Diese Sicherheitsnormen sind für Vordersitze in Kraftfahrzeugen strenger als für deren Rücksitze, da Vordersitze zusätzlich den Aufschlag des Körpers und Kopfes der Rücksitzpassagiere auffangen müssen. Daher sind die meisten Vordersitzlehnen als Metallkonstruktionen aufgebaut, obgleich auch andere Werkstoffe, insbesondere Kunststoffe oder Kunststoffverbunde mit hohem Elastizitätsmodul (hoher Steifigkeit) verwendet werden können. Aus Metallkonstruktionen aufgebaute Sitze sind verhältnismäßig schwer und teuer. Abhilfe können Rückenlehnen oder Sitzteile schaffen, die zumindest teilweise aus Kunststoff hergestellt sind oder deren Kunststoff entsprechend stabil ausgelegt ist oder zumindest partiell verstärkt ist.

Aus der DE 94 06 437 U1 ist ein Fahrzeugsitz mit einer Rückenlehne und einem Sitzunterteil bekannt, dessen Rückenlehne als einteilig geformter Hohl-Körper ausgebildet ist, wobei die Rückenlehne aus einem Kunststoff, insbesondere aus einem thermoplastischen Harz ausgebildet ist. In dem Kunststoffkörper der Rückenlehne ist ein Verstärkungselement aus einem Werkstoff mit hohem Elastizitätsmodul eingesetzt.

Die DE 22 23 361 offenbart ein Gestell für einen Fahrzeugsitz, welches sich durch ein in einem Kunststoffkörper eingebettetes Verstärkungsteil aus Draht, Metallrohr oder gepresstem Metall auszeichnet.

Aus DE 102 43 617 A1 ist eine Rückenlehne für einen Fahrzeugsitz mit einem Stützrahmen bekannt. Der Stützrahmen ist ein Spritzgießformteil aus einem langlastfaserverstärktem Polyamid. Zudem wird eine Lordoseplatte offenbart, die an den Stützrahmen eingeclipst oder eingehängt wird.

Die WO 00/47441 beschreibt einen Fahrzeugsitz mit einem Sitz- und/oder Rückenbereich, die aus einem aus Hinter- und Vorderschale fest miteinander verbundenen Grundkörper bestehen. In bevorzugter Ausführungsform sind Hinter- und Vorderschale aus Metall ausgeführt. Es wird dargelegt, dass Vorder- und/oder Hinterschale auch aus glasfaserverstärktem Kunststoff bestehen können.

Zur Herstellung von Kunststoff-Formteilen sind Verfahren wie Formpressen, Extrusion und Spritzgießen bekannt.

Beim Spritzgießen, das nur als Spritzguss oder Spritzgussverfahren bezeichnet wird, handelt es sich um ein Formgebungsverfahren, das in der Kunststoffverarbeitung sehr häufig verwendet wird. Im Spritzgussverfahren lassen sich äußerst wirtschaftlich direkt verwendbare Formteile in großer Stückzahl herstellen. Das Verfahren funktioniert vereinfacht beschrieben wie folgt: In einer Spritzgussmaschine, die einen beheizbaren Behälter aufweist, in der sich eine Austragsvorrichtung befindet, wird der jeweilige thermoplastische Kunststoff unter Wärmezufuhr geschmolzen und in eine Form aus Metall, die allgemein als Werkzeug bezeichnet wird, eingespritzt. Der Hohlraum des Werkzeuges bestimmt dabei die äußere Form und die Oberflächenstruktur des zu fertigenden Teiles.

Der Erfindung liegt die Aufgabe zugrunde eine Sitzstruktur, insbesondere eine Rückenlehne für einen Vordersitz zu schaffen, bei der statt der bisher verwendeten Metallstruktur ein hoher Anteil der Struktur aus einem Kunststoff ausgebildet ist. Dabei soll die Fertigung eines solchen Erzeugnisses einfach, schnell und kostengünstig sein.

Ausgangspunkt der Erfindung ist ein Verfahren zur Herstellung einer Rückenlehne mittels Spritzgießen, deren Holme ausbildende rahmenförmige Grundstruktur aus einem formstabilen Kunststoff in einem Spritzguss-Werkzeug gespritzt wird.

Erfindungsgemäß ist in einer Ausgestaltung des Verfahrens vorgesehen, dass gleichzeitig mit dem Spritzen der Holme ein zwischen den Holmen anzuordnendes Funktionselement in der Art einer Kunststoffplatte mit dem formstabilen Kunststoff gespritzt wird.

Hierdurch lässt sich eine Rückenlehne ausbilden, die folgendermaßen ausgebildet ist:
Eine Rückenlehne, deren aus Holmen gebildete rahmenförmige Grundstruktur aus einem formstabilen Kunststoff ausgebildet ist, wobei die rahmenförmige Grundstruktur zwischen den Holmen mindestens ein Funktionselement aufweist. Das mindestens eine Funktionselement ist aus dem formstabilen Kunststoff ausgebildet.

Erfindungsgemäß ist vorgesehen, dass das zwischen den Holmen angeordnete Funktionselement eine aus dem formstabilen Kunststoff gespritzte Kunststoffplatte mit einer vorgebbaren Form ist, wobei die Kunststoffplatte in der zwischen den Holmen der Grundstruktur gebildeten Fläche als Lordosestütze dient.

Erfindungsgemäß ist in einer anderen Ausgestaltung des Verfahrens vorgesehen, dass gleichzeitig mit dem Spritzen der Holme durch zuvor angeordnete Einleger in den Holmen anzuordnende Verstärkungselemente und zwischen den Holmen anzuordnende Einleger als Funktionselemente mit dem formstabilen Kunststoff überspritzt werden.

Hierdurch lassen sich Rückenlehnen ausbilden, die folgendermaßen ausgebildet sind:
Eine Rückenlehne, deren aus Holmen gebildete rahmenförmige Grundstruktur aus einem formstabilen Kunststoff ausgebildet ist, wobei die rahmenförmige Grundstruktur zwischen den Holmen mindestens ein Funktionselement aufweist, wobei das mindestens eine Funktionselement als kunststoffbeschichteter Einleger ausgebildet ist.

Erfindungsgemäß ist vorgesehen, dass das zwischen den Holmen angeordnete Funktionselement ist ein kunststoffbeschichteter, zwischen den Holmen der Grundstruktur angeordneter, partieller oder vollständiger Einleger in der Art eines Drahtes, der als mit dem formstabilen Kunststoff überspritzter kunststoffbeschichteter Steg in der zwischen den Holmen der Grundstruktur gebildeten Fläche als Federelement dient.

Eine weitere Rückenlehne, deren aus Holmen gebildete rahmenförmige Grundstruktur aus einem formstabilen Kunststoff ausgebildet ist, wobei die rahmenförmige Grundstruktur zwischen den Holmen mindestens ein Funktionselement aufweist, wobei das mindestens eine Funktionselement als kunststoffbeschichteter Einleger ausgebildet ist.

Erfindungsgemäß ist vorgesehen, dass das zwischen den Holmen angeordnete Funktionselement ein kunststoffbeschichteter, zwischen den Holmen der Grundstruktur angeordneter, partieller oder vollständiger Einleger in der Art einer Kunststoffplatte in einer vorgebbaren Form ist, wobei die Kunststoffplatte in der zwischen den Holmen der Grundstruktur gebildeten Fläche als Lordosestütze dient.

In einer bevorzugten Ausgestaltung der Erfindung ist es vorgesehen, dass in der rahmenförmigen Grundstruktur ein Einleger als verstärkendes Versteifungselement aus einem Metall, insbesondere einem Stahl oder aus einem Leichtmetall, insbesondere Aluminium oder Magnesium beziehungsweise jeweils Legierungen davon, angeordnet ist. Dieses Versteifungselement dient vorteilhaft der strukturellen Verstärkung der rahmenförmigen Grundstruktur, die wie vorne beschrieben gerade bei Vordersitzen von besonderer Bedeutung ist.

Vorteilhaft ist dieses verstärkende Versteifungselement deshalb, weil die zwischen den Holmen der Rückenlehne angeordneten Funktionselemente im Crashfall und im normalen Belastungsfall ebenfalls Kräfte auf die Holme übertragen. Durch ein in dem Rahmen angeordnetes, den Rahmen verstärkendes Versteifungselement können diese Kräfte besser aufgenommen werden.

Um eine ausreichende Eigensteifigkeit der rahmenartigen Grundstruktur der Rückenlehne und auch der Funktionselemente zu erreichen, wird in vorteilhafter Weise ein faserverstärkter Kunststoff eingesetzt.

Der Vorteil des Einsatzes faserverstärkten Kunststoffs besteht in seinen Eigenschaften. Faserverstärkter Kunststoff weist eine hohe gewichtsbezogene Festigkeit und Steifigkeit sowie ein hohes Schwingungsdämpfungsvermögen und eine hohe Dauerfestigkeit auf. Zudem sind eine geringe Wärmeausdehnung sowie eine sehr gute UV-Beständigkeit gegeben. Außerdem weist faserverstärkter Kunststoff eine sehr gute Verformbarkeit auf und kann so praktisch in jede Form gebracht werden, wobei ferner gleichzeitig eine Farbvorauswahl der zu fertigenden Komponenten durch Verwendung farbiger Fasern möglich ist. Faserverstärkter Kunststoff kann sehr gut in dem bereits genannten und kurz beschriebenen Spritzgussverfahren eingesetzt werden.

Die Erfindung erläutert beispielhaft aus Kunststoff gebildete Funktionselemente oder partiell oder vollständig mit Einlegern ausgerüstete, mit Kunststoff beschichtete, Funktionselemente, die nachfolgend - als erste und zweite Ausführungsvariante untergliedert - beschrieben werden.

In der ersten Ausführungsvariante wird eine federnde Anlagefläche im Rückenbereich eines Sitzbenutzers zwischen den Holmen des Rahmens der Rückenlehne gebildet, während die zweite Ausführungsvariante eine zwischen den Holmen des Rahmens der Rückenlehne im Lordosebereich eines Sitzbenutzers angeordnete Lordosestütze beispielsweise in der Art einer Lordoseplatte ist.

In einer ersten herkömmlichen Ausführungsform der ersten Ausführungsvariante ist ein zwischen den Holmen angeordnetes erstes Funktionselement als ein Kunststoffsteg vorgesehen, der in der zwischen den Holmen der Grundstruktur gebildeten Fläche als Federelement dient.

In einer zweiten und dritten erfindungsgemäßen Ausführungsform der ersten Ausführungsvariante ist ein zwischen den Holmen der Grundstruktur angeordnetes zweites oder drittes Funktionselement als ein beschichteter partieller Einleger (zweite Ausführungsform) oder beschichteter vollständiger Einleger (dritte Ausführungsform) angeordnet. Für die Einleger ist vorzugsweise ein Draht vorgesehen, so dass auch ein kunststoffbeschichteter Steg mit einem Draht-Einleger, in der zwischen den Holmen der Grundstruktur gebildeten Fläche als Federelement dient.

Bei den erfindungsgemäßen Ausführungsformen der ersten Ausführungsvariante, wird die aus dem Stand der Technik bekannte aus Metalldrähten gebildete Drahtmatte, die in der Sitzstruktur der Rückenlehne als federnde Anlagefläche ausgebildet ist, durch einen mit einem Einleger versehenen kunststoffbeschichteten Steg ersetzt.

In einer ersten Ausführungsform der zweiten Ausführungsvariante ist zwischen den Holmen ein viertes Funktionselement als ein Kunststoffteil, in der Art einer eckigen oder runden Kunststoffplatte oder in einer anderen vorgebbaren Form vorgesehen, die in der zwischen den Holmen der Grundstruktur gebildeten Fläche als Lordosestütze dient.

In einer zweiten und dritten Ausführungsform der zweiten Ausführungsvariante ist ein zwischen den Holmen der Grundstruktur angeordnetes fünftes oder sechstes Funktionselement als ein beschichteter partieller Einleger (zweite Ausführungsform) oder beschichteter vollständiger Einleger (dritte Ausführungsform) angeordnet. Der Einleger wird in einer Art Platte ausgeführt, die als kunststoffbeschichtete Platte in der zwischen den Holmen der Grundstruktur gebildeten Fläche als bewegliche Lordosestütze dient. Die beispielsweise aus einem Metall ausgebildete Platte kann sehr dünn ausgeführt werden und weist eine Materialdicke auf, die unterhalb der Materialdicke liegt, die für Lordosestützplatten nach dem Stand der Technik verwendet werden. Hierdurch ergibt sich der gewünschte Gewichtsvorteil für den Fahrzeugsitz und ein Fahrzeug insgesamt.

In allen drei Ausführungsformen der zweiten Ausführungsvariante wird die aus dem Stand der Technik bekannte metallische Lordoseplatte, die in der Sitzstruktur der Rückenlehne als stützende Anlagefläche ausgebildet ist, durch eine Kunststoffplatte - ohne Einleger - oder durch eine kunststoffbeschichtete Platte mit partiell oder vollständig angeordneten plattenartigen Einlegern ersetzt.

Die Einleger für die Lordoseplatte müssen keine plattenartigen Einleger sein. Gegebenenfalls können auch Drähte mattenartig angeordnet und mit Kunststoff beschichtet werden, so dass eine Lordoseplatte gebildet wird, die aus kunststoffbeschichteten Drähten besteht, wodurch die Versteifung der Funktionselemente analog zu den plattenartigen Einlegern erreicht wird.

Es ist vorgesehen, dass ein als Versteifungselement verwendeter Einleger im Rahmen der Rückenlehne und/oder der als drahtartiger oder plattenartiger Einleger zwischen den Holmen des Rahmens der Rückenlehne angeordnet ist, aus Metall und/oder einer Glas-/Karbonfaser ausgebildet ist.

In einer besonders bevorzugten Ausgestaltung ist der zwischen den Holmen des Rahmens angeordnete Einleger, als drahtartiger oder plattenartiger Einleger (zweite und dritte Ausführungsform beider Ausführungsvarianten) mit dem in der rahmenförmigen Grundstruktur angeordneten Einleger, der als den Rahmen verstärkendes Versteifungselement dient, verbunden. Dazu wird im Beschreibungsteil anhand der Ausführungsbeispiele noch näher ausgeführt.

Die Herstellung einer solchen Rückenlehne findet bevorzugt mittels Spritzgießen in einem Arbeitsschritt statt.

Es ist vorgesehen, dass gleichzeitig mit dem Spritzen der Holme entweder
- ein zwischen den Holmen anzuordnendes Funktionselement in der Art einer Kunststoffplatte (ohne Einleger) mit dem formstabilen Kunststoff gespritzt oder
- durch zuvor angeordnete Einleger in den Holmen anzuordnende Verstärkungselemente und zwischen den Holmen anzuordnende Einleger als Funktionselemente mit dem formstabilen Kunststoff überspritzt werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Seitenansicht, einer aus Kunststoff hergestellten erfindungsgemäßen Rückenlehne mit einem in der Grundstruktur der Rückenlehne als Einleger ausgebildeten Versteifungselement;
- Figur 2: die Rückenlehne gemäß Figur 1 in einer Vorderansicht mit zwischen den Holmen der rahmenförmigen Grundstruktur der Rückenlehne angeordneten Funktionselementen;
- Figur 3A: einen herkömmlichen Kunststoffsteg, der als elastisch federndes Element zwischen den Holmen der rahmenförmigen Grundstruktur angeordnet ist;
- Figur 3B: einen erfindungsgemäßen Kunststoffsteg, der als elastisch federndes Element zwischen den Holmen der rahmenförmigen Grundstruktur angeordnet ist, mit einem als Einleger partiell im Kunststoffsteg integrierten Draht;
- Figur 3C: einen erfindungsgemäßen Kunststoffsteg, der als elastisch federndes Element zwischen den Holmen der rahmenförmigen Grundstruktur angeordnet ist, mit einem als Einleger vollständig im Kunststoffsteg integrierten Draht und
- Figur 3D: einen erfindungsgemäßen Kunststoffsteg, der als elastisch federndes Element zwischen den Holmen der rahmenförmigen Grundstruktur angeordnet ist, mit einem als Einleger vollständig im Kunststoffsteg integrierten Draht, der an dem Versteifungselement in den Holmen der Rückenlehne nach Figur 1 befestigt ist.

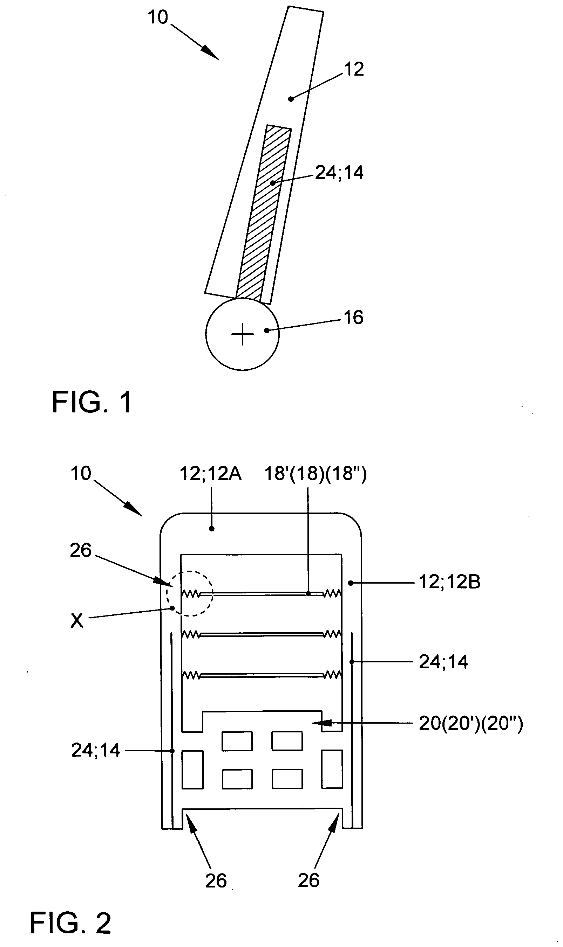

Figur 1 zeigt eine Seitenansicht, einer aus Kunststoff hergestellten Rückenlehne 10 mit einem in der rahmenartigen Grundstruktur 12 als Einleger 24 ausgebildeten, aus einem Metall oder einem Leichtmetall vorab hergestellten Versteifungselement 14. Das Versteifungselement 14 kann so angeordnet sein, dass es seitlich, wie dargestellt sichtbar ist oder in der aus Kunststoff bestehenden Grundstruktur 12 der Rückenlehne 10 nicht sichtbar eingebettet ist, wie es in Figur 2 in einer schematischen Vorderansicht gezeigt ist.

Das Versteifungselement 14 ist mit einem Lehnenlager oder einem schematisch dargestellten Lehnenneigungsversteller 16 verbunden, so dass Kräfte, die bei der Benutzung des Fahrzeugsitzes und im Crashfall auftreten von der versteiften Grundstruktur 12, 14 der Rückenlehne 10 und dem Lehnenlager beziehungsweise dem Lehnenneigungsversteller 16 aufgenommen werden können. Ist der Kunststoff ausreichend steif, um die erforderlichen Kräfte aufnehmen zu können ist die Anordnung des verstärkenden Versteifungselementes 14 nicht notwendig. Die Kräfte werden dann aus der Kunststoff-Rückenlehne 10 direkt in das in der Regel metallisch ausgebildete Lehnenlager beziehungsweise den Lehnenneigungsversteller 16 eingeleitet.

Figur 2 zeigt die Rückenlehne 10 schematisch in der Vorderansicht. Eine Quertraverse 12A geht im Ausführungsbeispiel einstückig in Holme 12B über, wobei zwischen der durch die Holme 12B gebildeten rahmenförmigen Grundstruktur 12 der Rückenlehne 10 die Funktionselemente 18' und 20 angeordnet sind. Die in Figur 2 in Klammern dargestellten Bezugszeichen 18, 18" und 20', 20" bedeuten an dieser Position angeordnete jedoch nicht dargestellte verschiedene Ausführungsvarianten der Funktionselemente, die jedoch obwohl nicht dargestellt, nachfolgend ebenfalls beschrieben sind.

Bei den bekannten Rückenlehnen in Fahrzeugsitzen werden zwischen den Holmen Drahtstege oder Drahtmatten ausgebildet, um im Anlagebereich der Rückenlehne für den Benutzer komfortable Federungseigenschaften einer gepolsterten Rückenlehne zu schaffen.

Außerdem ist zwischen den Holmen der Rückenlehne im Bereich der Lordose des Sitzbenutzers eine Lordosestütze befestigt, die zumeist in Plattenform ausgeführt ist. Diese Platte ist mittels einer Lordoseverstelleinheit zum Sitzbenutzer hin reversibel verlagerbar und innerhalb der Rückenlehne nach oben und unten beziehungsweise zu beiden Seiten der Rückenlehne verschiebbar angeordnet.

Diese Drahtmatten beziehungsweise die Lordosestützen stellen Funktionselemente dar, die beispielhaft für andere Funktionselemente stehen, für die erfindungsgemäß vorgesehen ist, sie als Kunststoff-Komponenten oder als kunststoffbeschichtete Komponenten auszubilden.

Zwei beispielhafte Ausführungsvarianten werden nachfolgend jeweils in drei Ausführungsformen vorgestellt, die nachfolgend anhand der verwendeten Bezugszeichen definiert werden.

Die erste Ausführungsvariante dient dem Ersatz der bekannten Drahtmatte im Rückenbereich eines Sitzbenutzers.

Bekannte erste Ausführungsform der ersten Ausführungsvariante:
Kunststoffsteg 18 zwischen den Holmen 12B der Rückenlehne 10 (ohne Einleger).

Zweite erfindungsgemäße Ausführungsform der ersten Ausführungsvariante:
Kunststoffsteg 18' zwischen den Holmen 12B der Rückenlehne 10 mit einem partiellen Einleger 22'.

Dritte erfindungsgemäße Ausführungsform der ersten Ausführungsvariante:
Kunststoffsteg 18" zwischen den Holmen 12B der Rückenlehne 10 mit einem vollständigen Einleger 22".

Die zweite Ausführungsvariante dient dem Ersatz der bekannten Lordosestütze im Lordosebereich eines Sitzbenutzers.

Erste erfindungsgemäße Ausführungsform der zweiten Ausführungsvariante:
Kunststoffplatte 20 zwischen den Holmen 12B der Rückenlehne 10 (ohne Einleger).

Zweite erfindungsgemäße Ausführungsform der zweiten Ausführungsvariante:
Kunststoffplatte 20' zwischen den Holmen 12B der Rückenlehne 10 mit einem partiellen Einleger 22'.

Dritte erfindungsgemäße Ausführungsform der zweiten Ausführungsvariante:
Kunststoffplatte 20" zwischen den Holmen 12B der Rückenlehne 10 mit einem vollständigen Einleger 22".

In der ersten Ausführungsform der ersten Ausführungsvariante ist es vorgesehen, die Drahtmatte durch mindestens einen zwischen den Holmen 12B der Rückenlehne 10 angeordneten Kunststoffsteg 18 zu ersetzen.

Die Bezeichnung Kunststoffsteg 18 bedeutet nicht, dass es sich um einen zwischen den Holmen 12B der Rückenlehne nur gerade, stegartig verlaufendes Kunststoffelement handelt.

Der Kunststoffsteg 18 kann zwischen den Holmen parabelförmig oder mäanderförmig oder in anderen denkbaren Konturen ausgebildet sein. Diese Erläuterungen gelten auch für die anderen Ausführungsformen beider Ausführungsvarianten.

Der verwendete Kunststoff ist dauerelastisch und weist ein sehr gutes Rückstellungsverhalten auf, so dass der Kunststoffsteg 18 oder mehrere Kunststoffstege 18 eine metallische Drahtmatte nach dem Stand der Technik ersetzen und eine Art zwischen den Holmen 12B der Rückenlehne 10 angeordnetes Federelement aus Kunststoff oder eine Art federnde Matte aus Kunststoff bilden. Diese erste Ausführungsform der ersten Ausführungsvariante ist in Figur 2 nicht dargestellt.

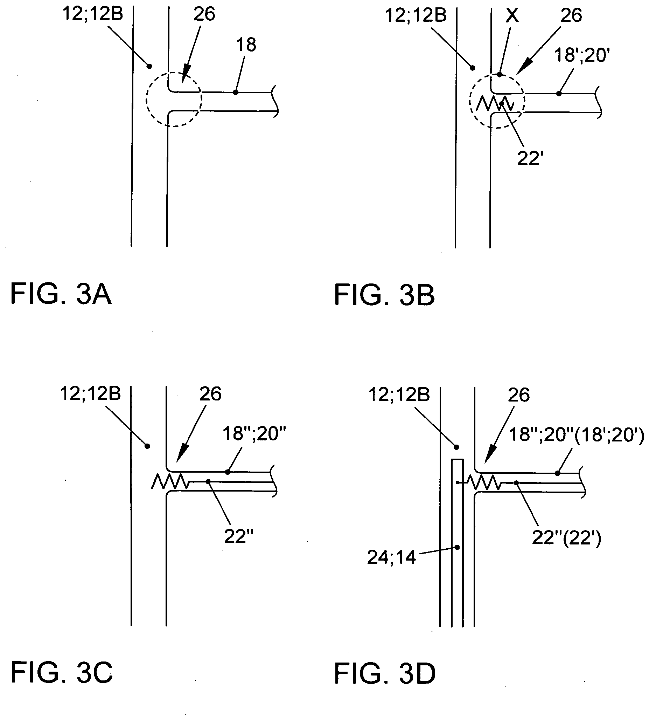

Jedoch verdeutlicht die Figur 3A die Anordnung und Ausbildung eines - ohne Einleger - ausgebildeten Kunststoffsteges 18 in einem Übergangsbereich 26 an einem Holm 12B.

Gemäß der ersten Ausführungsform ist es in einer zweiten Ausführungsvariante vorgesehen, eine plattenartige Lordosestütze durch mindestens eine zwischen den Holmen 12B der Rückenlehne 10 angeordnete Kunststoffplatte 20 zu ersetzen. Diese erste Ausführungsform der zweiten Ausführungsvariante ist in Figur 2 dargestellt. Der dafür verwendete Kunststoff ist ebenfalls dauerelastisch und weist ein sehr gutes Rückstellungsverhalten auf, so dass die Kunststoffplatte 20, die metallische Platte einer Lordosestütze nach dem Stand der Technik ersetzt und ein zwischen den Holmen 12B der Rückenlehne 10 angeordnete Art federnde Platte aus Kunststoff bildet.

Wie die Figur 2 zeigt, weist die Kunststoffplatte 20 beispielsweise rechteckige Öffnungen auf, wodurch sich deren Flexibilität erhöht und ferner das Gewicht weiter reduziert wird. Ferner werden seitliche Stege zur Anbindung an die Holme 12 des Rahmens 12 der Rückenlehne 10 ausgeführt. Diese in dem Übergangsbereich 26 ausgeführten seitlichen Stege stellen ebenfalls Kunststoffstege 18 nach Figur 3A dar, wie sie im oberen Bereich der Rückenlehne 10 für den rückenseitigen federnden Kunststoffsteg ausgeführt sind, wobei die Kunststoffstege für die Kunststoffplatte der Lordosestütze seitlich der Kunststoffplatte 20 beispielsweise etwas breiter ausgeführt sind, damit für den Benutzer eine flächigere Anlage und eine höhere Kraftübertragung zu den Holmen 12B der Rückenlehne 10 möglich ist.

In einer zweiten Ausführungsform der ersten Ausführungsvariante wird die Anbindung an die Holme 12B durch einen drahtförmigen, partiell angeordneten Einleger 22' unterstützt. Figur 2 zeigt beispielsweise drei parallel horizontal angeordnete Kunststoffstege 18', die als elastisch federnde Komponenten zwischen den Holmen 12B der rahmenförmigen Grundstruktur 12 angeordnet sind, wobei im Übergangsbereich 26 zwischen den Holmen 12B des Rahmens 12, wie Figur 3B zeigt, ein partiell angeordneter Einleger 22', der als Federelement dient und als Federelement ausgebildet ist, angeordnet ist. Dieser partiell angeordnete Einleger 22' wird bei der Herstellung der Rückenlehne 10 eingespritzt, sozusagen mit Kunststoff beschichtet.

Diese zweite Ausführungsform hat den Vorteil, dass gerade im Übergangsbereich 26 zwischen den Holmen 12B und dem mit einem Einleger 22' versehenen Kunststoffsteg 18' höhere Kräfte aufgenommen und übertragen werden können und die dadurch erreichbare Elastizität des beschichteten Kunststoffsteges 18' in diesem Bereich insgesamt zur Erhöhung des Federungskomforts führt.

Diese zweite Ausführungsform der ersten Ausführungsvariante ist in einer zweiten Ausführungsform der zweiten Ausführungsvariante analog in den Übergangsbereichen 26 einer Kunststoffplatte 20' zu den Holmen 12B ausführbar. Dadurch erhält auch die Kunststoffplatte 20' durch partielle Einleger 22' eine flexiblere und verstärkte Anbindung an die Holme 12B, wodurch mittels der Lordoseverstelleinheit größere Verstellwege realisierbar sind, da insgesamt höhere Kräfte aufgenommen werden können.

In einer dritten Ausführungsform, die für beide Ausführungsvarianten zum Einsatz kommen kann, wird die Anbindung an die Holme 12B des Rahmens 12 und die Steifigkeit durch einen drahtförmigen vollständig zwischen den Holmen 12B verlaufenden Einleger 22" unterstützt. Die Querschnitte dieser vorzugsweise drahtförmigen Einleger 22" können in vorteilhafter Weise gegenüber den Querschnitten nach dem Stand der Technik geringer gewählt werden. Die zugehörige Kunststoff-Beschichtung nimmt ebenfalls einen Teil der einwirkenden Kräfte auf.

Es wird ein beispielsweise metallischer Draht, als elastisch federndes Element vollständig zwischen den Holmen 12B der rahmenförmigen Grundstruktur 12 angeordnet, so dass nicht nur (Fig. 3B) im Übergangsbereich 26 zwischen den Holmen 12B des Rahmens 12 ein als beschichteter Kunststoffsteg 18" ausgeführter vollständiger Einleger 22" ausgebildet wird.

Ein solcher beschichteter Kunststoffsteg 18" mit einem vollständigen Einleger 22" wird in der dritten Ausführungsform beider Ausführungsvarianten, wie Figur 3C zeigt, im Übergangsbereich 26 als Federelement ausgeführt, welches zur Mitte der Rückenlehne 10 hin, als einstückiger Einleger 22 in einen geraden, einfachen Draht übergeht. Dieser auf der gesamten Breite zwischen den Holmen 12B angeordnete Einleger 22" wird, wie die partiellen Einleger auch, bei der Herstellung der Rückenlehne 10 komplett mit eingespritzt.

Die dritte Ausführungsform hat den Vorteil, dass nicht nur im Übergangsbereich 26 zwischen den Holmen 12B und dem mit einem Einleger 22" versehenen Kunststoffsteg 18", sondern auch im Rückenbereich und/oder im Lordosebereich einer Rückenlehne 10 höhere Kräfte aufgenommen werden können, wobei die Querschnitte der Drahteinleger 22" sehr gering, insbesondere geringer, als die aus dem Stand der Technik bekannten Querschnitte ausgeführt werden können. Eine Gewichtsersparnis bei gleichen oder sogar besseren Steifigkeitseigenschaften ist die Folge.

In vorteilhafter Weise erhält eine Kunststoffplatte 20', 20" mit Einlegern 22', 22" eine flexiblere und verstärkte Anbindung an den Holmen 12B und eine verstärkte Struktur, wodurch in der zweiten Ausführungsvariante mittels der Lordoseverstelleinheit durch die dritte Ausführungsform 20" gegenüber der zweiten Ausführungsform 20' noch größere Verstellwege realisierbar sind, da in der als Lordosestütze verwendeten mit einem nicht partiell, sondern vollständig zwischen den Holmen 12B angeordneten Einleger 22" der Kunststoffplatte 20" insgesamt noch höhere Kräfte aufgenommen werden können.

In einer bevorzugten Ausgestaltung, die ebenfalls für die zweite und dritte Ausführungsform beider Ausführungsvarianten anwendbar ist und in Figur 3D beispielhaft für die dritte Ausführungsform beider Ausführungsvarianten dargestellt ist, wird der die rahmenförmige Grundstruktur 12 verstärkende Einleger 24, der als Verstärkungselement 14 im Rahmen 12 dient, mit dem kunststoffbeschichteten Steg 18"(18') mit dem vollständigen Einleger 22"(22') oder der kunststoffbeschichteten Platte 20"(20') mit dem vollständigen Einleger 22"(22') verbunden.

Durch diese Ausgestaltung wird zwischen der rahmenförmigen Grundstruktur 12 und den Funktionselementen 18", 20" der zweiten und dritten Ausführungsform der jeweiligen Ausführungsvariante über die Einleger 22' (zweite Ausführungsform) oder 22" (dritte Ausführungsform) und den Einleger 24 ein innerer Verbund hergestellt, wodurch die auf die Funktionselemente 18', 20' (zweite Ausführungsform) oder 18", 20" (dritte Ausführungsform) ausgeübten Kräfte über die Einleger 22', 22" und 24 in die rahmenförmige Grundstruktur 12 der Rückenlehne 10 eingeleitet werden und dort aufgenommen werden können.

Es wird abschließend darauf hingewiesen, dass als draht- oder plattenartige Einleger 22', 22", 24 nicht nur Drähte aus Metall oder Leichtmetall zum Einsatz kommen können, sondern auch Glas-/Karbonfasern eingespritzt werden können. Dabei ist auch eine Kombination der verwendeten Materialien denkbar. Die Auswahl hängt auch von den Rohstoffkosten der verwendeten Materialien ab, beziehungsweise werden an Positionen innerhalb der Rückenlehne 10 in denen höhere Kräfte beziehungsweise Kraftspitzen auftreten, Materialien mit höheren Festigkeitseigenschaften verwendet.

Zudem wird vorgeschlagen, dass dort wo höhere Kräfte beziehungsweise Kraftspitzen auftreten, die Querschnitte der jeweils eingesetzten Materialien entsprechend erhöht werden oder das mehrere Einleger 22', 22", 24 gleichen oder unterschiedlichen Querschnittes eingespritzt werden.

### Bezugszeichenliste

- 10: Rückenlehne
- 12: rahmenförmige Grundstruktur/Rahmen
- 12A: Querträger
- 12B: Holme
- 14: Versteifungselement
- 16: Lehnenneigungsversteller
- 18: Kunststoffsteg
- 18': kunststoffbeschichteter Steg mit partiellem Einleger
- 18": kunststoffbeschichteter Steg mit vollständigem Einleger
- 20: Kunststoffplatte
- 20': kunststoffbeschichtete Platte mit partiellem Einleger
- 20": kunststoffbeschichtete Platte mit vollständigem Einleger
- 22': partieller Einleger
- 22": vollständiger Einleger
- 24: Einleger
- 26: Übergangsbereich

## Patentansprüche

1. Rückenlehne (10), deren aus Holmen (12B) gebildete rahmenförmige Grundstruktur (12) aus einem formstabilen Kunststoff ausgebildet ist, wobei die rahmenförmige Grundstruktur zwischen den Holmen (12B) mindestens ein Funktionselement aufweist, wobei das mindestens eine Funktionselement als kunststoffbeschichteter Einleger ausgebildet ist,
**dadurch gekennzeichnet, dass**
das zwischen den Holmen (12B) angeordnete Funktionselement ein kunststoffbeschichteter, zwischen den Holmen (12B) der Grundstruktur angeordneter, partieller oder vollständiger Einleger (22', 22") in der Art eines Drahtes ist, der als mit dem formstabilen Kunststoff überspritzter kunststoffbeschichteter Steg (18', 18") in der zwischen den Holmen (12B) der Grundstruktur (12) gebildeten Fläche als Federelement dient.

2. Rückenlehne (10) nach Anspruch 1, **dadurch gekennzeichnet, dass** in der rahmenförmigen Grundstruktur (12) ein Einleger (24) als verstärkendes Versteifungselement (14) aus einem Metall oder einem Leichtmetall oder einer Glas-/Karbonfaser angeordnet ist.

3. Rückenlehne (10) nach Anspruch 1, **dadurch gekennzeichnet, dass** der Kunststoff ein faserverstärkter Kunststoff ist.

4. Rückenlehne (10) nach Anspruch 1, **dadurch gekennzeichnet, dass** der drahtförmige Einleger (22', 22") aus einem Metall und/oder Leichtmetall und/oder einer Glas-/Karbonfaser ausgebildet ist.

5. Rückenlehne (10), deren aus Holmen (12B) gebildete rahmenförmige Grundstruktur (12) aus einem formstabilen Kunststoff ausgebildet ist, wobei die rahmenförmige Grundstruktur zwischen den Holmen (12B) mindestens ein Funktionselement (20) aufweist, **dadurch gekennzeichnet, dass**
das mindestens eine Funktionselement aus dem formstabilen Kunststoff ausgebildet ist, wobei das zwischen den Holmen (12B) angeordnete Funktionselement eine aus dem formstabilen Kunststoff gespritzte Kunststoffplatte (20) mit einer vorgebbaren Form ist, wobei die Kunststoffplatte (20) in der zwischen den Holmen (12B) der Grundstruktur (12) gebildeten Fläche als Lordosestütze dient.

6. Rückenlehne (10), deren aus Holmen (12B) gebildete rahmenförmige Grundstruktur (12) aus einem formstabilen Kunststoff ausgebildet ist, wobei die rahmenförmige Grundstruktur zwischen den Holmen (12B) mindestens ein Funktionselement aufweist, wobei das mindestens eine Funktionselement als kunststoffbeschichteter Einleger ausgebildet ist, **dadurch gekennzeichnet, dass**
das zwischen den Holmen (12B) angeordnete Funktionselement ein kunststoffbeschichteter, zwischen den Holmen (12B) der Grundstruktur angeordneter, partieller oder vollständiger Einleger (22', 22") in der Art einer Kunststoffplatte (20', 22") in einer vorgebbaren Form ist, wobei die Kunststoffplatte (20', 22") in der zwischen den Holmen (12B) der Grundstruktur (12) gebildeten Fläche als Lordosestütze dient.

7. Rückenlehne (10) nach Anspruch 6, **dadurch gekennzeichnet, dass** der plattenartige Einleger (22', 22") aus einem Metall und/oder Leichtmetall und/oder einer Glas-/Karbonfaser ausgebildet ist.

8. Rückenlehne (10) nach Anspruch 6 oder 7, **dadurch gekennzeichnet, dass** in der rahmenförmigen Grundstruktur (12) ein Einleger (24) als verstärkendes Versteifungselement (14) aus einem Metall oder einem Leichtmetall oder einer Glas-/Karbonfaser angeordnet ist, wobei der zwischen den Holmen (12B) angeordnete Einleger (22', 22") mit dem in der rahmenförmigen Grundstruktur (12) angeordneten Einleger (24), dem Versteifungselement (14) verbunden ist.

9. Verfahren zur Herstellung einer Rückenlehne (10) mittels Spritzgießen, deren Holme (12B) ausbildende rahmenförmige Grundstruktur aus einem formstabilen Kunststoff in einem Spritzguss-Werkzeug gespritzt wird, **dadurch gekennzeichnet, dass** gleichzeitig mit dem Spritzen der Holme (12B) entweder
- ein zwischen den Holmen (12B) anzuordnendes Funktionselement in der Art einer Kunststoffplatte (20) mit dem formstabilen Kunststoff gespritzt oder
- durch zuvor angeordnete Einleger (24) in den Holmen (12B) anzuordnende Verstärkungselemente (14) und zwischen den Holmen (12B) anzuordnende Einleger (18', 20', 22', 18", 20", 22") als Funktionselemente mit dem formstabilen Kunststoff überspritzt werden.

## Claims

1. A back-rest (10), whose frame-shaped base structure (12) formed from struts (12B) is formed from a dimensionally stable plastic, wherein the frame-shaped base structure has at least one functional element between the struts (12B), wherein the at least one functional element is designed as a plastic-coated insert,
**characterized in that**
the functional element arranged between the struts (12B) is a plastic-coated, partial or complete insert (22', 22") in the manner of a wire arranged between the struts (12B) of the base structure, which serves as a spring element in the surface formed between the struts (12B) of the base structure (12) as a plastic-coated web (18', 18") overmolded with dimensionally stable plastic.

2. A back-rest (10) according to Claim 1, **characterized in that** an insert (24) is arranged in the frame-shaped base structure (12) as a reinforcing stiffening element (14) made of metal or a light metal or a glass-/carbon fiber.

3. A back-rest (10) according to Claim 1, **characterized in that** the plastic is a fiber-reinforced plastic.

4. A back-rest (10) according to Claim 1, **characterized in that** the wire-shaped insert (22', 22") is formed from a metal and/or light metal and/or a glass-/carbon fiber.

5. A back-rest (10), whose frame-shaped base structure (12) formed from struts (12B) is formed from a dimensionally stable plastic, wherein the frame-shaped base structure has at least one functional element (20) between the struts (12B), **characterized in that**
the at least one functional element is formed from the dimensionally stable plastic, wherein the functional element arranged between the struts (12B) is an injection molded plastic plate (20) with a predeterminable form made of the dimensionally stable plastic, wherein the plastic plate (20) in the surface formed between the struts (12B) of the base structure (12) serves as lumbar support.

6. A back-rest (10), whose frame-shaped base structure (12) formed from struts (12B) is formed from a dimensionally stable plastic, wherein the frame-shaped base structure has at least one functional element between the struts (12B), wherein the at least one functional element is designed as a plastic-coated insert, **characterized in that** the functional element arranged between the struts (12B) is a plastic-coated, partial or complete insert (22', 22") in the manner of a plastic plate (20', 22") in a predeterminable form arranged between the struts (12B) of the base structure, wherein the plastic plate (20', 22") in the surface formed between the struts (12B) of the base structure (12) serves as lumbar support.

7. A back-rest (10) according to Claim 6, **characterized in that** the plate-like insert (22', 22") is formed from a metal and/or light metal and/or a glass-/carbon fiber.

8. A back-rest (10) according to Claim 6 or 7, **characterized in that** in the frame-shaped base structure (12) an insert (24) is arranged as reinforcing stiffening element (14) made from a metal or a light metal or a glass-/carbon, wherein the insert (22', 22") arranged between the struts (12B) is connected to the insert (24) arranged in the frame-shaped base structure (12), the stiffening element (14).

9. A method for producing a back-rest (10) by means of injection molding, whose frame-shaped base structure formed from struts (12B) is injection-molded from a dimensionally stable plastic in an injection molding tool, **characterized in that** simultaneous with the injection molding of the struts (12B) either
- a functional element to be arranged between the struts (12B) in the manner of a plastic plate (20) is injection-molded with a dimensionally stable plastic or
- through the previously arranged insert (24) reinforcing elements (14) to be arranged in the struts (12B) and inserts (18', 20', 22', 18", 20", 22") to be arranged between the struts (12B) as functional elements are overmolded with the dimensionally stable plastic.

## Revendications

1. Dossier (10), dont la structure de base en forme de cadre (12), formée de longerons (12B), est constituée d'une matière plastique indéformable, la structure de base en forme de cadre comprenant, entre les longerons (12B), au moins un élément fonctionnel, l'au moins un élément fonctionnel étant conçu comme un insert revêtu de matière plastique,
**caractérisé en ce que**
l'élément fonctionnel disposé entre les longerons (12B) est un insert (22', 22") partiel ou complet, revêtu de matière plastique et disposé entre les longerons (12B) de la structure de base, présentant la forme d'un fil, qui sert d'élément à ressort, en tant que surface formée, entre les longerons (12B) de la structure de base (12), avec une nervure (18', 18") revêtue de manière plastique surmoulée avec la matière plastique indéformable.

2. Dossier (10) selon la revendication 1, **caractérisé en ce que**, dans la structure de base (12) est disposé un insert (24) en tant qu'élément de rigidification de renfort (14) en métal ou en métal léger ou en fibres de verre/carbone.

3. Dossier (10) selon la revendication 1, **caractérisé en ce que** la matière plastique est une matière plastique renforcée par des fibres.

4. Dossier (10) selon la revendication 1, **caractérisé en ce que** l'insert en forme de fil (22', 22") est constitué d'un métal et/ou d'un métal léger et/ou de fibres de verre/carbone.

5. Dossier (10), dont la structure de base en forme de cadre (12), formée de longerons (12B), est constituée d'une matière plastique indéformable, la structure de base en forme de cadre comprenant, entre les longerons (12B), au moins un élément fonctionnel (20), **caractérisé en ce que**
l'au moins un élément fonctionnel est constitué de la matière plastique indéformable, l'au moins un élément fonctionnel disposé entre les longerons (12B) étant une plaque de matière plastique (20) injectée constituée de la matière plastique indéformable avec une forme prédéterminée, la plaque de matière plastique (20) servant, dans la surface formée entre les longerons (12B) de la structure de base (12), de soutien lombaire.

6. Dossier (10), dont la structure de base en forme de cadre (12), formée de longerons (12B), est constituée d'une matière plastique indéformable, la structure de base en forme de cadre comprenant, entre les longerons (12B), au moins un élément fonctionnel, **caractérisé en ce que**
l'au moins un élément fonctionnel disposé entre les longerons (12B) étant un insert partiel ou complet (22', 22"), revêtu de matière plastique et disposé entre les longerons (12B) de la structure de base, à la manière d'une plaque de matière plastique (20', 22") d'une forme prédéterminée, la plaque de matière plastique (20', 22") servant, dans la surface formée entre les longerons (12B) de la structure de base (12), de soutien lombaire.

7. Dossier (10) selon la revendication 6, **caractérisé en ce que** l'insert en forme de plaque (22', 22') est constitué d'un métal et/ou d'un métal léger et/ou de fibres de verre/carbone.

8. Dossier (10) selon la revendication 6 ou 7, **caractérisé en ce que**, dans la structure de base en forme de cadre (12), est disposé un insert (24) en tant qu'élément de rigidification de renfort (14) en métal ou en métal léger ou en fibres de verre/carbone, l'insert (22', 22") disposé entre les longerons (12B) étant relié avec l'insert (24) disposé dans la structure de base (12) en forme de cadre, l'élément de rigidification (14).

9. Procédé de fabrication d'un dossier (10) à l'aide d'un moulage par injection, dont la structure de base en forme de cadre constituant les longerons (12B) est injectée à partir d'une matière plastique indéformable dans un outil de moulage par injection, **caractérisé en ce que**, en même temps que l'injection des longerons (12B), soit
- un élément fonctionnel à disposer entre les longerons (12B) est injecté à la manière d'une plaque de matière plastique (20) avec la matière plastique indéformable soit
- à l'aide d'inserts (24), disposés auparavant, des éléments de renfort (14) à disposer dans les longerons (12B) et des inserts (18', 20', 22', 18", 20", 22") à disposer entre les longerons (12B) sont surmoulés en tant qu'éléments fonctionnel avec la matière plastique indéformable.
